# EUROPÄISCHE PATENTSCHRIFT

(11) **EP 2 910 910 B1**
(45) Veröffentlichungstag und Bekanntmachung des Hinweises auf die Patenterteilung: **23.03.2016**
(21) Anmeldenummer: 14198233.0
(22) Anmeldetag: 16.12.2014
(51) Int. Cl.: G01F 23/292, G01S 17/08

(54) **Sensor zum Bestimmen eines Füllstandes**
Sensor for determining a fill state
Capteur destiné à déterminer un niveau de remplissage

(30) Priorität: 21.02.2014 DE 102014102295
(43) Veröffentlichungstag der Anmeldung: 26.08.2015
(73) Patentinhaber: SICK AG, 79183 Waldkirch (DE)
(72) Erfinder: Hirt, Günter, 77790 Steinach (DE)
(74) Vertreter: Ludewigt, Christoph

(56) Entgegenhaltungen:
- EP-A1- 2 601 896
- EP-A2- 0 024 527
- DE-A1- 4 339 488
- DE-C2- 3 704 960
- JP-A- 2000 005 196

## Beschreibung

Die vorliegende Erfindung betrifft einen Sensor zum Bestimmen eines Füllstandes einer in einem Behälter füllbaren Flüssigkeit gemäß dem Oberbegriff des Anspruchs 1.

Um den Füllstand beim Befüllen eines Behälters mit einer Flüssigkeit zu bestimmen, sind unterschiedliche Verfahren bzw. Vorrichtungen bekannt, die auf unterschiedlichen physikalischen Prinzipien beruhen.

Zum Beispiel wird der Füllstand zum einen mittels eines auf Veränderung der elektrischen Eigenschaften basierenden Sensors oder zum anderen mittels eines auf Schallwellen oder elektromagnetischen Wellen basierenden Sensors bestimmt.

Bei der Verwendung eines Sensors, der die Veränderung der elektrischen Eigenschaften bestimmt, wird ein sich verändernder elektrischer Messstrom zwischen zwei Elektroden gemessen, um daraus den Füllstand der Flüssigkeit in dem Behälter zu erhalten. Hierzu muss die zu vermessende Flüssigkeit elektrisch leitend sein.

Bei einem auf Schallwellen oder elektromagnetischen Wellen basierenden Sensor werden die Schallwellen oder elektromagnetischen Wellen entweder in dem Behälter ausgesendet und die reflektierten Schallwellen oder elektromagnetischen Wellen erfasst oder entlang einer Sonde in dem Behälter geleitet und eine Veränderung der Sonde durch Eintauchen in die Flüssigkeit gemessen.

Anhand einer Laufzeit der Schallwellen oder elektromagnetischen Wellen zwischen dem Aussenden und dem Empfangen der Schallwellen oder elektromagnetischen Wellen im ersten Fall bzw. einer Größe einer Absorption der Schallwellen oder elektromagnetischen Wellen durch die Flüssigkeit im zweiten Fall, kann der aktuelle Füllstand der Flüssigkeit in dem Behälter bestimmt werden.

EP 0 024 527 A2 offenbart eine Anordnung zur Messung eines Schmelzestandes in einer Kokille einer Stranggießanlage, wobei die Anordnung einen Sensor gemäß dem Oberbegriff des Anspruchs 1 umfasst.

Es ist eine Aufgabe der vorliegenden Erfindung einen Sensor zum Bestimmen eines Füllstandes einer in einem Behälter füllbaren Flüssigkeit derart zu verbessern, dass eine genaue Bestimmung des Füllstandes möglich ist.

Die Aufgabe wird erfindungsgemäß gelöst durch einen Sensor mit den Merkmalen des Anspruchs 1.

Hierbei umfasst der Sensor zum Bestimmen eines Füllstandes einer in einem Behälter füllbaren Flüssigkeit, einen Lichtsender zum Aussenden wenigstens eines Lichtimpulses; einen Empfänger zum Empfangen wenigstens eines reflektierten Rücklichtimpulses, wobei der Lichtimpuls an einer Flüssigkeitsoberfläche zumindest teilweise reflektierbar ist; eine Steuer- und Auswerteeinheit zum Steuern des Sensors und zum Auswerten des empfangenen Rücklichtimpulses; eine Strahlführungseinheit zum Bündeln eines Flüssigkeitsstrahls, die ausgebildet ist, den Flüssigkeitsstrahl entlang einer vorgegebenen Strecke in einer vorgegebenen Richtung, vorzugsweise in Richtung der Flüssigkeitsoberfläche, zu formen, und eine Ein- und Auskopplungseinheit zum Einkoppeln des Lichtimpulses in den Flüssigkeitsstrahl, der in den Behälter einleitbar ist, und zum Auskoppeln des Rücklichtimpulses an den Empfänger, wobei die Auswerteeinheit eine Entfernung zwischen der Ein- und Auskopplungseinheit und der Flüssigkeitsoberfläche aus der bestimmten Zeitdifferenz errechnet.

Hierbei weist die Erfindung den Vorteil auf, dass durch eine Führung des Lichtimpulses in den Flüssigkeitsstrahl eine fokussierte Reflexion des Lichtimpulses an der Flüssigkeitsoberfläche erzielbar ist, so dass eine höhere Energie des Rücklichtimpulses gegenüber einer offenen Reflexion auf der Flüssigkeitsoberfläche für die Auswertung zur Verfügung steht. Ferner ist eine Messentfernung des Sensors durch die Nutzung des Flüssigkeitsstrahls als Leitmedium nicht unnötig eingeschränkt. Ferner hat die Erfindung den Vorteil, dass der Flüssigkeitsstrahl seine Form über eine wesentlich größere Entfernung beibehält, so dass die Lichtimpulse und Rücklichtimpulse verbessert geleitet sind.

Erfindungsgemäß wird unter Einkoppeln unter anderem verstanden, dass der vom Sender ausgesendete Lichtimpuls durch die Ein- und Auskopplungseinheit in den Flüssigkeitsstrahl eingeleitet bzw. gelenkt wird, so dass sich der Lichtimpuls in dem Flüssigkeitsstrahl fortbewegt. Auskoppeln bedeutet analog der umgekehrte Vorgang, bei dem der reflektierte Rücklichtimpuls aus dem Flüssigkeitsstrahl austritt und in Richtung des Empfängers geleitet bzw. gelenkt wird.

Gemäß einem bevorzugten Ausführungsbeispiel besteht der Lichtimpuls aus ultraviolettem, sichtbarem oder infrarotem Licht. Insbesondere ist die Wellenlänge des Lichtimpulses in Abhängigkeit von der optischen Eigenschaft der Flüssigkeit auszuwählen. D.h. die Wellenlänge des Lichtimpulses muss in einem Bereich der Lichtdurchlässigkeit des Flüssigkeitsstrahls liegen.

Gemäß einem weiteren bevorzugten Ausführungsbeispiel weist die Ein- und Auskopplungseinheit eine Reflexionseinheit auf, die ausgebildet ist, den ausgesendeten Lichtimpuls in Richtung des Flüssigkeitsstrahls durchzulassen und den reflektierten Rücklichtimpuls in Richtung des Empfängers umzulenken. Hierdurch ist es vorteilhaft, dass der Sensor keine Messelemente aufweist, die in der Flüssigkeit angeordnet sind.

Gemäß einem weiteren bevorzugten Ausführungsbeispiel besteht die Strahlführungseinheit aus einem Material, das für die Wellenlänge des Lichtimpulses undurchlässig ist, so dass der Lichtimpuls und der Rücklichtimpuls in den Flüssigkeitsstrahl entlang der Strahlführungseinheit leitbar sind.

Gemäß einem weiteren bevorzugten Ausführungsbeispiel weist die Ein- und Auskopplungseinheit eine Verbindungseinheit auf, die die Ein- und Auskopplungseinheit mit einer Leitung einer Befüllungsanlage verbindet. Vorteilhafterweise ist die Verbindungseinheit ausgebildet, den Flüssigkeitsstrahl in Richtung der Flüssigkeitsoberfläche zu lenken, und den Lichtimpuls und den reflektierten Rücklichtimpuls durchzulassen.

Gemäß einem weiteren bevorzugten Ausführungsbeispiel ist die Steuer- und Auswerteeinheit ausgebildet, ein erstes Referenzsignal zu erhalten, wenn der Lichtimpuls die Reflexionseinheit passiert, und ein zweites Referenzsignal zu erhalten, wenn der Lichtimpuls eine zu der Flüssigkeitsoberfläche hin angeordnete Öffnung der Strahlführungseinheit passiert. Dadurch stehen der Steuer- und Auswerteeinheit mehrere Signaldaten für die Auswertung zur Verfügung.

Gemäß einem weiteren bevorzugten Ausführungsbeispiel ist die Steuer- und Auswerteeinheit ausgebildet, aus dem ersten Referenzsignal einen Startzeitpunkt für einen Messvorgang und aus dem zweiten Referenzsignal einen Referenzzeitpunkt für den Messvorgang zu bestimmen. Mittels der zu dem Zeitpunkt des Rücklichtimpuls zusätzlichen Zeitpunkte kann vorteilhafterweise eine genauere Auswertung der Laufzeit des Lichtimpulses und damit der Entfernung zwischen dem Sensor und der Flüssigkeitsoberfläche durchgeführt werden.

Gemäß einem weiteren bevorzugten Ausführungsbeispiel ist die Steuer- und Auswerteeinheit mit einem Rotor verbunden, der in der Leitung der Befüllungsanlage vorgesehen ist und durch die Flüssigkeit in der Leitung antreibbar ist.

Gemäß einem weiteren bevorzugten Ausführungsbeispiel ist eine Betriebsenergie des Sensors durch Drehung des Rotors, der einem Generator angehört, beziehbar. Hieraus ergibt sich der Vorteil, dass die Befüllungsanlage den Sensor mit Energie versorgt und nur Energie während eines Befüllungsvorgangs erzeugt und vom Sensor verbraucht wird.

Gemäß einem weiteren bevorzugten Ausführungsbeispiel ist eine Aktivierung des Sensors durch die Drehung des Rotors auslösbar, und die Steuer- und Auswerteeinheit ist ausgebildet, die Drehung des Rotors zu unterbinden. Hierdurch ist sichergestellt, dass einerseits der Sensor zu Beginn eines Befüllungsvorgangs betriebsbereit ist und andererseits beim Erreichen eines vorgegebenen Füllstandes die Steuer- und Auswerteeinheit die Befüllung durch Unterbinden eines Drehens des Rotors unterbricht.

Gemäß einem weiteren bevorzugten Ausführungsbeispiel ist die Steuer- und Auswerteinheit ausgebildet, den Lichtimpuls in einer bestimmten Zeitperiode auszusenden und die Zeitperiode mit der Zeitdauer eines Messvorganges zu verkürzen.

Vorteilhafte Ausgestaltungen und Weiterbildungen sowie weitere Vorteile der Erfindung sind den Unteransprüchen, der nachfolgenden Beschreibung und den Zeichnungen zu entnehmen. Im Nachfolgenden werden vorteilhafte Ausgestaltungen der Erfindung anhand der Zeichnungen näher erläutert. Die Erfindung ist hierbei nicht auf das näher erläuterte Anwendungsbeispiel beschränkt. Hierzu zeigt, teilweise schematisiert:
- Fig. 1: eine schematische Darstellung einer Befüllungsanlage mit einem erfindungsgemäßen Sensor, und
- Fig. 2: eine schematische Auswertung der Steuer- und Auswerteeinheit des erfindungsgemäßen Sensors.

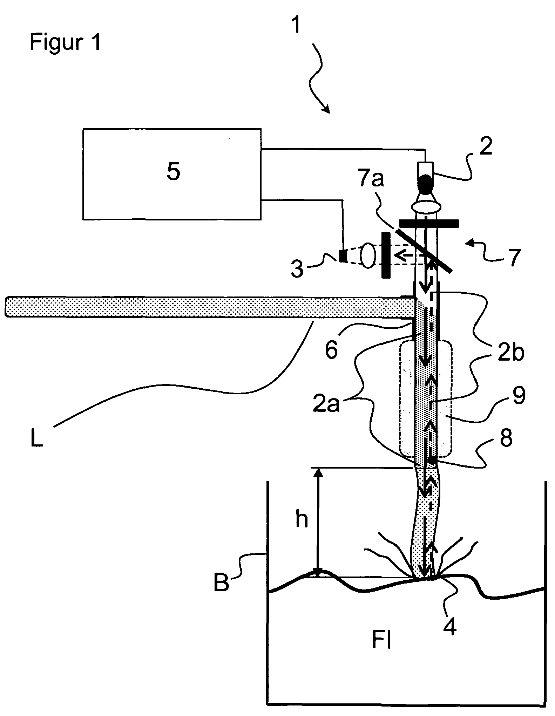

Die Figur 1 zeigt schematisch eine Befüllungsanlage, die aus einem Behälter B und einer Leitung L besteht. In der Leitung L wird die zu befüllende Flüssigkeit Fl Richtung des Behälters B und in diesem in Form eines Flüssigkeitsstrahls 8 eingeleitet.

Um die Befüllung des Behälters B zu steuern und zu überwachen, ist an einer Austrittöffnung der Leitung L ein Sensor 1 zum Bestimmen eines Füllstandes h der Flüssigkeit Fl in dem Behälter B vorgesehen.

Der Sensor 1 weist einen Lichtsender 2, einen Empfänger 3 und eine Steuer- und Auswerteeinheit 5 auf. Der Lichtsender 2 dient dazu, wenigstens einen Lichtimpuls 2a auszusenden, der in Richtung einer Flüssigkeitsoberfläche 4 in dem Behälter B gerichtet ist. Hierbei kann der Lichtimpuls 2a aus ultraviolettem, sichtbarem oder infrarotem Licht bestehen. Die Wellenlänge des Lichtimpulses 2a ist abhängig von der optischen Eigenschaft der Flüssigkeit Fl auszuwählen. D.h. die Wellenlänge des Lichtimpulses 2a muss in einem Bereich der Lichtdurchlässigkeit des Flüssigkeitsstrahls 8 liegen.

Beim Auftreffen des Flüssigkeitsstrahls 8 auf die Flüssigkeitsoberfläche 4 in dem Behälter B, entsteht lokal eine Verwirbelung der Flüssigkeitsoberfläche 4, die sich wie eine Reflexionsfläche für den Lichtimpuls 2a verhält. An dieser Reflexionsfläche reflektiert der Lichtimpuls 2a und bildet einen reflektierten Rücklichtimpuls 2b, der von dem Empfänger 3 detektiert wird.

Ferner weist der Sensor 1 eine Ein- und Auskopplungseinheit 7 mit einer Verbindungseinheit 6 auf, wobei die Verbindungseinheit 6 die Ein- und Auskopplungseinheit 7 mit der Austrittsöffnung der Leitung L der Befüllungsanlage verbindet. Über die Ein- und Auskopplungseinheit 7 ist somit der Sensor 1 an die Befüllungsanlage befestigt und in Richtung des Behälters B gerichtet.

Hierbei ist die Verbindungseinheit 6 auch dazu vorgesehen, die Flüssigkeit Fl aus der Leitung L der Befüllungsanlage in Form des Flüssigkeitsstrahls 8 in Richtung des Behälters B, insbesondere der Flüssigkeitsoberfläche 4, zu lenken, und den Lichtimpuls 2a und den reflektierten Rücklichtimpuls 2b durchzulassen.

Bei der Befüllung des Behälters B fließt somit die Flüssigkeit Fl entlang der Leitung L in die Verbindungseinheit 6 des Sensors 1 und wird in Richtung des Behälters B gelenkt.

Eine Strahlführungseinheit 9 zum Bündeln des Flüssigkeitsstrahls 8 ist vorgesehen, wobei die Strahlführungseinheit 9 ausgebildet ist, den Flüssigkeitsstrahl 8 entlang einer vorgegebenen Strecke, d.h. entsprechend einer Länge der Strahlführungseinheit 9, in einer vorgegebenen Richtung, vorzugsweise in direkte Richtung zu der Flüssigkeitsoberfläche 4, zu führen. Dadurch ist der Flüssigkeitsstrahl 8 dazu gezwungen, seine Form über eine wesentlich größere Entfernung beizubehalten, bevor er auseinander fällt und verwirbelt.

Vorteilhafterweise besteht die Strahlführungseinheit 9 aus einem Material, das für die Wellenlänge des Lichtimpulses 2a undurchlässig ist, so dass der Lichtimpuls 2a und der Rücklichtimpuls 2b in dem Flüssigkeitsstrahl 8 entlang der Strahlführungseinheit 9 ohne Abschwächung leitbar ist. D.h. insbesondere, dass der Lichtimpuls 2a und der Rücklichtimpuls 2b nicht aus dem Flüssigkeitsstrahl 8 emittieren und somit an Intensität abschwächen können.

Weiterhin weist die Ein- und Auskopplungseinheit 7 eine Reflexionseinheit 7a auf, die ausgebildet ist, den ausgesendeten Lichtimpuls 2a in Richtung des Flüssigkeitsstrahls 8 durchzulassen und den reflektierten Rücklichtimpuls 2b in Richtung des Empfängers 3 umzulenken.

Durch solch einen Aufbau der Ein- und Auskopplungseinheit 7, aber insbesondere des Sensors 1, sind keine messenden Sensorelemente in der Flüssigkeit Fl bzw. dem Flüssigkeitsstrahl 8 angeordnet, die als "Fremdkörper"' in der Flüssigkeit Fl betrachtet werden können. Somit wäre auf einfacherweise ein Reinheitsgebot der Flüssigkeit Fl erzielbar.

Weiterhin stehen keine messenden Sensorelemente in direktem Kontakt mit der Flüssigkeit Fl, so dass einerseits eine Abnutzung des Sensors 1 verringert ist und andererseits eine Betriebsdauer des Sensors 1 erhöht ist.

Gemäß der Erfindung ist die Steuer- und Auswerteeinheit 5 zum Steuern des Sensors 1 und zum Auswerten des empfangenen reflektierten Rücklichtimpulses 2b vorgesehen, wobei die Steuer- und Auswerteeinheit 5 ausgebildet ist, eine Zeitdifferenz zwischen dem Aussenden des Lichtimpulses 2a und dem Empfangen des Rücklichtimpulses 2b zu bestimmen. Aus der Zeitdifferenz errechnet die Steuer- und Auswerteeinheit 5 eine Entfernung zwischen der Ein- und Auskopplungseinheit 7 und der Flüssigkeitsoberfläche 4, so dass daraus der aktuelle Füllstand h des Behälters B ermittelt ist.

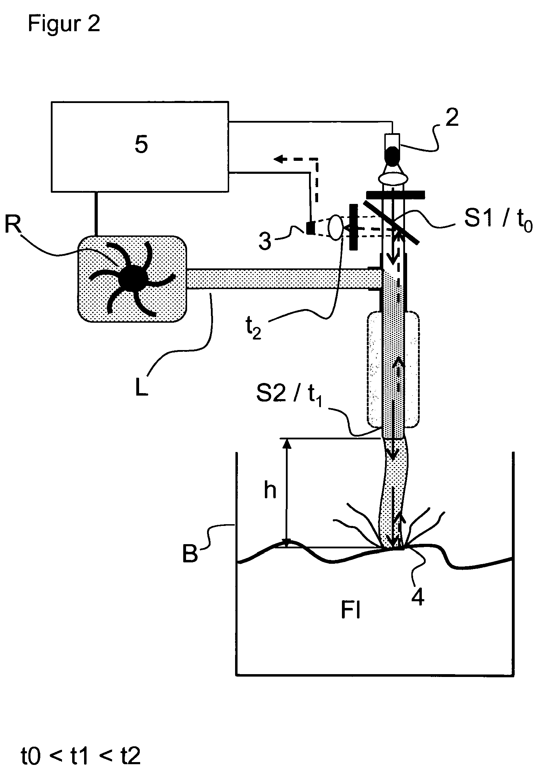

Der Messvorgang wird anhand der Figur 2 schematisch dargelegt.

Die Steuer- und Auswerteeinheit 5 veranlasst den Lichtsender 2 in einer bestimmten Zeitperiode den Lichtimpuls 2a auszusenden.

Wenn der Lichtimpuls 2a die Reflexionseinheit 7a passiert, erhält die Steuer- und Auswerteeinheit 5 ein erstes Referenzsignal S1, und wenn der Lichtimpuls 2a eine zu der Flüssigkeitsoberfläche 4 hin angeordnete Öffnung der Strahlführungseinheit 9 passiert, erhält die Steuer- und Auswerteeinheit 5 ein zweites Referenzsignal S2.

Aus dem ersten Referenzsignal S1 bestimmt die Steuer- und Auswerteeinheit 5 einen Startzeitpunkt t0 für einen Messvorgang. Mit dem Startzeitpunkt t0 erfasst die Steuer- und Auswerteeinheit 5 eine Intensität des Lichtimpulses 2a.

Aus dem zweiten Referenzsignal S2 bestimmt die Steuer- und Auswerteeinheit 5 einen Referenzzeitpunkt t1, an der der Lichtimpuls 2a bzw. der Flüssigkeitsstrahl 8 aus der Strahlführungseinheit 9 austritt. Die Intensität des Lichtimpulses 2a zu diesem Referenzzeitpunkt t1 wird ebenfalls von der Steuer- und Auswerteeinheit 5 erfasst.

Der Lichtimpuls 2a reflektiert an der Flüssigkeitsoberfläche 4, und der gebildete Rücklichtimpuls 2b wird an der Reflexionseinheit 7a zum Empfänger 3 abgelenkt und zu einem Zeitpunkt t2 von der Steuer- und Auswerteeinheit 5 erfasst. Die Intensität des Rücklichtimpulses 2b zu dem Zeitpunkt t2 wird ebenfalls von der Steuer- und Auswerteeinheit 5 bestimmt.

Anhand der Zeitdifferenz zwischen dem Aussenden des Lichtimpulses 2a und dem Empfangen des Rücklichtimpulses 2b bestimmt die Steuer- und Auswerteeinheit 5 eine Laufzeit des Lichtimpulses 2a und daraus die Entfernung zwischen der Flüssigkeitsoberfläche 4 und der Ein- und Auskopplungseinheit 7 bzw. dem Sensor 1. Hieraus kann die Steuer- und Auswerteeinheit 5 ganz präzise den Füllstand h der Flüssigkeit Fl in dem Behälter B herleiten.

Um die Präzision der Messung des Füllstandes h zu erhöhen, ist die Steuer- und Auswerteeinheit 5 ausgebildet, die Zeitperiode, in dem der Lichtimpuls 2a ausgesendet wird, mit der Zeitdauer des Messvorganges zu verkürzen, so dass ein Abstand zwischen dem Aussenden von zwei Lichtimpulsen 2a immer kleiner wird.

Ferner können die detektierten Zeitpunkte t0, t1, t2 und die gleichzeitig erfassten Intensitäten dazu genutzt werden, Fehler bei der Messung zu kompensieren.

Weiterhin ist vorteilhafterweise in der Leitung L ein Rotor R vorgesehen, der einem nicht dargestellten Generator angehört und für die Leitung L abdichtend angeordnet ist. Der Rotor R ist mit der Steuer- und Auswerteeinheit 5 verbunden.

Die in Richtung des Behälters B in der Leitung L fließende Flüssigkeit Fl treibt den Rotor R an, so dass Energie erzeugt wird. Die erzeugte Energie wird der Steuer- und Auswerteeinheit 5 des Sensors 1 zugeführt, so dass der Sensors 1 eine autonome Energieversorgung aufweist.

Ferner kann mit der Bereitstellung der Energie über die Steuer- und Auswerteeinheit 5 der Betriebszustand des Sensors 1 aktiviert werden, so dass eine zusätzliche Prozesssicherheit bei der Befüllung des Behälters mit einer Überwachung durch den Sensor 1 gewährleistet ist. D.h. sobald die Flüssigkeit Fl in die Leitung L fließt, wird der Sensor 1 aktiviert, und der Befüllungsvorgang wird überwacht.

Vorteilhafterweise ist die Steuer- und Auswerteeinheit 5 des Sensors 1 ausgebildet, beim Erreichen eines vorgegebenen Füllstandes h zusätzlich zu einem Stoppsignal an die Befüllungsanlage die Drehung des Rotors R zu unterbinden, so dass der Befüllungsvorgang durch Stoppen der Flüssigkeitszufuhr aufgrund eines Stopps der Befüllungsanlage und des Rotors R beendet ist. Damit ist durch eine redundante Abschaltung der Flüssigkeitszufuhr eine erhöhte Sicherheit beim Befüllungsvorgang erzielbar.

**Bezugszeichenliste**

| | | | |
|---|---|---|---|
| 1 | Sensor | B | Behälter |
| 2 | Lichtsender | Fl | Flüssigkeit |
| 2a | Lichtimpuls | h | Füllstand |
| 2b | Rücklichtimpuls | L | Leitung |
| 3 | Empfänger | R | Rotor |
| 4 | Flüssigkeitsoberfläche | S1, S2 | erstes und zweites Referenzsignal |
| 5 | Steuer- und Auswerteeinheit | t0 | Startzeitpunkt |
| 6 | Verbindungseinheit | t1, t2 | Referenzzeitpunkt |
| 7 | Ein- und Auskopplungseinheit | | |
| 7a | Reflexionseinheit | | |
| 8 | Flüssigkeitsstrahl | | |
| 9 | Strahlführungseinheit | | |

## Patentansprüche

1. Sensor (1) zum Bestimmen eines Füllstandes (h) einer in einem Behälter (B) füllbaren Flüssigkeit (Fl), mit
einem Lichtsender (2) zum Aussenden wenigstens eines Lichtimpulses (2a); einem Empfänger (3) zum Empfangen wenigstens eines reflektierten Rücklichtimpulses (2b), wobei der Lichtimpuls (2a) an einer Flüssigkeitsoberfläche (4) zumindest teilweise reflektierbar ist; und
einer Steuer- und Auswerteeinheit (5) zum Steuern des Sensors (1) und zum Auswerten des empfangenen Rücklichtimpulses (2b), wobei die Steuer- und Auswerteeinheit (5) ausgebildet ist, zur Bestimmung einer Zeitdifferenz zwischen einem Aussenden des Lichtimpulses (2a) und einem Empfangen des Rücklichtimpulses (2b), **gekennzeichnet durch**
eine Strahlführungseinheit (9) zum Bündeln eines Flüssigkeitsstrahls (8), der in den Behälter (B) einleitbar ist, wobei die Strahlführungseinheit (9) ausgebildet ist, den Flüssigkeitsstrahl (8) entlang einer vorgegebenen Strecke in einer vorgegebenen Richtung, vorzugsweise in Richtung der Flüssigkeitsoberfläche (4), zu formen, und
eine Ein- und Auskopplungseinheit (7) zum Einkoppeln des Lichtimpulses (2a) in den Flüssigkeitsstrahl (8) und zum Auskoppeln des Rücklichtimpulses (2b) an den Empfänger (3),
wobei die Auswerteeinheit (5) ausgebildet ist, eine Entfernung zwischen der Ein- und Auskopplungseinheit (7) und der Flüssigkeitsoberfläche (4) aus der bestimmten Zeitdifferenz zu errechnen.

2. Sensor (1) nach Anspruch 1, **dadurch gekennzeichnet, dass** der Lichtimpuls (2a) aus ultraviolettem, sichtbarem oder infrarotem Licht besteht.

3. Sensor (1) nach Anspruch 1 oder 2, **dadurch gekennzeichnet, dass** die Ein- und Auskopplungseinheit (7) eine Reflexionseinheit (7a) aufweist, die ausgebildet ist, den aus-gesendeten Lichtimpuls (2a) in Richtung des Flüssigkeitsstrahls (8) durchzulassen und den reflektierten Rücklichtimpuls (2b) in Richtung des Empfängers (3) umzulenken.

4. Sensor (1) nach einem der vorhergehenden Ansprüche, **dadurch gekennzeichnet, dass** die Strahlführungseinheit (9) aus einem Material besteht, das für eine Wellenlänge des Lichtimpulses (2a) undurch-lässig ist, so dass der Lichtimpuls (2a) und der Rücklichtimpuls (2b) in dem Flüssigkeitsstrahl (8) entlang der Strahlführungseinheit (9) leitbar sind.

5. Sensor (1) nach einem der Ansprüche 1 bis 4, **dadurch gekennzeichnet, dass** die Ein- und Auskopplungseinheit (7) eine Verbindungseinheit (6) aufweist, die die Ein- und Auskopplungseinheit (7) mit einer Leitung (L) einer Befüllungsanlage verbindet.

6. Sensor (1) nach Anspruch 5, **dadurch gekennzeichnet, dass** die Verbindungseinheit (6) ausgebildet ist, den Flüssigkeitsstrahl (8) in Richtung der Flüssigkeitsoberfläche (4) zu lenken, und den Lichtimpuls (2a) und den reflektierten Rücklichtimpuls (2b) durchzulassen.

7. Sensor (1) nach einem der Ansprüche 1 bis 6, **dadurch gekennzeichnet, dass** die Steuer- und Auswerteeinheit (5) ausgebildet ist, ein erstes Referenzsignal (S1) zu erhalten, wenn der Lichtimpuls (2a) die Reflexionseinheit (7a) passiert, und ein zweites Referenzsignal (S2) zu erhalten, wenn der Lichtimpuls (2a) eine zu der Flüssigkeitsoberfläche (4) hin angeordnete Öffnung der Strahl-führungseinheit (9) passiert.

8. Sensor (1) nach Anspruch 7, **dadurch gekennzeichnet, dass** die Steuer- und Auswerteeinheit (5) ausgebildet ist, aus dem ersten Referenzsignal (S1) einen Startzeitpunkt (t0) für einen Messvorgang und aus dem zweiten Referenzsignal (S2) einen Referenzzeitpunkt (t1) für den Messvorgang zu bestimmen.

9. Sensor (1) nach einem der Ansprüche 1 bis 8, **dadurch gekennzeichnet, dass** die Steuer- und Auswerteeinheit (5) mit einem Rotor (R) verbunden ist, der in der Leitung (L) der Befüllungsanlage vorgesehen ist und durch die Flüssigkeit (Fl) in der Leitung (L) antreibbar ist.

10. Sensor (1) nach Anspruch 9, **dadurch gekennzeichnet, dass** eine Betriebsenergie des Sensors (1) durch Drehung des Rotors (R), der einem Generator angehört, beziehbar ist.

11. Sensor (1) nach Anspruch 9 oder 10, **dadurch gekennzeichnet, dass** eine Aktivierung des Sensors (1) durch die Drehung des Rotors (R) auslösbar ist, und die Steuer- und Auswerteeinheit 5 ausgelegt ist, die Drehung des Rotors (R) zu unterbinden.

12. Sensor (1) nach einem der Ansprüche 1 bis 11, **dadurch gekennzeichnet, dass** die Steuer- und Auswerteinheit (5) ausgebildet ist, den Lichtimpuls (2a) in einer bestimmten Zeitperiode auszusenden und die Zeitperiode mit der Zeitdauer eines Messvorganges zu verkürzen.

## Claims

1. A sensor (1) for determining a filling level (h) of a liquid (Fl) fillable into a container (B), comprising
a light transmitter (2) for transmitting at least one light pulse (2a);
a receiver (3) for receiving at least one reflected returned light pulse (2b), wherein the light pulse (2a) is at least partly reflectable at a liquid surface (4); and
a control and evaluation unit (5) for controlling the sensor (1) and for evaluating the received returned light pulse (2b), wherein the control and evaluation unit (5) is configured for determining a time difference between a transmission of the light pulse (2a) and a reception of the returned light pulse (2b); **characterized by**
a jet guide unit (9) for bundling a liquid jet (8) which can be introduced into the container (B), with the jet guide unit (9) being configured to shape the liquid jet (8) along a predefined path in a predefined direction, preferably in the direction of the liquid surface (4); and
a coupling and decoupling unit (7) for coupling the light pulse (2a) into the liquid jet (8) and for decoupling the returned light pulse (2b) to the receiver (3),
wherein the evaluation unit (5) is configured for calculating a distance between the coupling and decoupling unit (7) and the liquid surface (4) from the determined time difference.

2. A sensor (1) in accordance with claim 1, **characterized in that** the light pulse (2a) comprises ultraviolet light, visible light or infrared light.

3. A sensor (1) in accordance with claim 1 or claim 2, **characterized in that** the coupling or decoupling unit (7) has a reflection unit (7a) which is configured to transmit the transmitted light pulse (2a) in the direction of the liquid jet (8) and to deflect the reflected returned light pulse (2b) in the direction of the receiver (3).

4. A sensor (1) in accordance with any one of the preceding claims, **characterized in that** the jet guide unit (9) comprises a material which is impermeable for a wavelength of the light pulse (2a) so that the light pulse (2a) and the returned light pulse (2b) in the liquid jet (8) can be conducted along the jet guide unit (9).

5. A sensor (1) in accordance with any one of the claims 1 to 4, **characterized in that** the coupling and decoupling unit (7) has a connection unit (6) which connects the coupling and decoupling unit (7) to a line (L) of a filling system.

6. A sensor (1) in accordance with claim 5, **characterized in that** the connection unit (6) is configured to direct the liquid jet (8) in the direction of the liquid surface (4) and to transmit the light pulse (2a) and the reflected returned light pulse (2b).

7. A sensor (1) in accordance with any one of the claims 1 to 6, **characterized in that** the control and evaluation unit (5) is configured to obtain a first reference signal (S1) when the light pulse (2a) passes the reflection unit (7a) and to obtain a second reference signal (S2) when the light pulse (2a) passes an opening of the jet guide unit (9) arranged toward the liquid surface (4).

8. A sensor (1) in accordance with claim 7, **characterized in that** the control and evaluation unit (5) is configured to determine a starting point in time (t0) for a measurement process from the first reference signal (S1) and a reference point in time (t1) for the measurement process from the second reference signal (S2).

9. A sensor (1) in accordance with any one of the claims 1 to 8, **characterized in that** the control and evaluation unit (5) is connected to a rotor (R) which is provided in the line (L) of the filling system and which can be driven by the liquid (Fl) in the line (L).

10. A sensor (1) in accordance with claim 9, **characterized in that** an operating energy of the sensor (1) can be sourced by rotation of the rotor (R) which belongs to a generator.

11. A sensor (1) in accordance with claim 9 or claim 10, **characterized in that** an activation of the sensor (1) can be triggered by the rotation of the rotor (R); and **in that** the control and evaluation unit (5) is configured to suppress the rotation of the rotor (R).

12. A sensor (1) in accordance with any one of the claims 1 to 11, **characterized in that** the control and evaluation unit (5) is configured to transmit the light pulse (2a) in a specific time period and to shorten the time period over the time duration of a measurement process.

## Revendications

1. Capteur (1) pour déterminer un niveau de remplissage (h) d'un liquide (Fl) à remplir dans un récipient (B), comprenant
un émetteur de lumière (2) pour émettre au moins une impulsion de lumière (2a) ;
un récepteur (3) pour recevoir au moins une impulsion de lumière renvoyée réfléchie (2b), dans lequel l'impulsion de lumière (2a) est susceptible d'être au moins partiellement réfléchie au niveau d'une surface (4) du liquide ; et
une unité de commande et d'évaluation (5) pour commander le capteur (1) et pour évaluer l'impulsion de lumière renvoyée reçue (2b), dans lequel l'unité de commande et d'évaluation (5) est réalisée pour déterminer une différence temporelle entre une émission de l'impulsion lumineuse (2a) et une réception de l'impulsion de lumière renvoyée (2b) ; **caractérisé par**
une unité de guidage de jet (9) pour focaliser un jet de liquide (8) qui est susceptible d'être introduit dans le récipient (B),
dans lequel l'unité de guidage de jet (9) est réalisée pour former le jet de liquide (8) le long d'un trajet prédéterminé dans une direction prédéterminée, de préférence en direction de la surface (4) du liquide,
et
une unité de couplage et de découplage (7) pour coupler l'impulsion de lumière (2a) dans le jet de liquide (8) et pour découpler l'impulsion de lumière renvoyée (2b) vers le récepteur (3),
dans lequel l'unité d'évaluation (5) est réalisée pour calculer une distance entre l'unité de couplage et de découplage (7) et la surface (4) du liquide à partir de la différence temporelle déterminée.

2. Capteur (1) selon la revendication, **caractérisé en ce que** l'impulsion de lumière (2a) est formée de lumière ultraviolette, visible ou infrarouge.

3. Capteur (1) selon la revendication 1 ou 2, **caractérisé en ce que** l'unité de couplage et de découplage (7) comprend une unité de réflexion (7a) qui est réalisée pour laisser passer l'impulsion de lumière émise (2a) en direction du jet de liquide (8) et pour dévier l'impulsion de lumière renvoyée réfléchie (2b) en direction du récepteur (3).

4. Capteur (1) selon l'une des revendications précédentes, **caractérisé en ce que** l'unité de guidage de jet (9) est en un matériau qui n'est pas transparent pour une longueur d'onde de l'impulsion de lumière (2a), de sorte que l'impulsion de lumière (2a) et l'impulsion de lumière renvoyée (2b) dans le jet de liquide (8) sont susceptibles d'être guidées le long de l'unité de guidage de jet (9).

5. Capteur (1) selon l'une des revendications 1 à 4, **caractérisé en ce que** l'unité de couplage et de découplage (7) comprend une unité de liaison (6) qui relie l'unité de couplage et de découplage (7) avec une conduite (L) d'une installation de remplissage.

6. Capteur (1) selon la revendication 5, **caractérisé en ce que** l'unité de liaison (6) est réalisée pour dévier le jet de liquide (8) en direction de la surface (4) du liquide, et pour laisser passer l'impulsion de lumière (2a) et l'impulsion de lumière renvoyée réfléchie (2b).

7. Capteur (1) selon l'une des revendications 1 à 6, **caractérisé en ce que** l'unité de commande et d'évaluation (5) est réalisée pour recevoir un premier signal de référence (S1) quand l'impulsion de lumière (2a) passe à travers l'unité de réflexion (7a), et pour recevoir un second signal de référence (S2) quand l'impulsion de lumière (2a) passe à travers une ouverture, agencée en direction de la surface (4) du liquide, de l'unité de guidage de jet (9).

8. Capteur (1) selon la revendication 7, **caractérisé en ce que** l'unité de commande et d'évaluation (5) est réalisée pour déterminer à partir du premier signal de référence (S1) un instant de départ (t0) pour une opération de mesure, et pour déterminer à partir du second signal de référence (S2) un instant de référence (t1) pour l'opération de mesure.

9. Capteur (1) selon l'une des revendications 1 à 8, **caractérisé en ce que** l'unité de commande et d'évaluation (5) est reliée à un rotor (R) qui est prévu dans la conduite (L) de l'installation de remplissage et qui est susceptible d'être entraîné par le liquide (F1) dans la conduite (L).

10. Capteur (1) selon la revendication 9, **caractérisé en ce qu'**une énergie de fonctionnement du capteur (1) est susceptible d'être obtenue par rotation du rotor (R), qui appartient à un générateur.

11. Capteur (1) selon la revendication 9 ou 10, **caractérisé en ce qu'**une activation du capteur (1) est susceptible d'être déclenchée par la rotation du rotor (R), et l'unité de commande et d'évaluation (5) est conçue pour inhiber une rotation du rotor (R).

12. Capteur (1) selon l'une des revendications 1 à 11, **caractérisé en ce que** l'unité de commande et d'évaluation (5) est réalisée pour émettre l'impulsion de lumière (2a) dans une période temporelle déterminée, et pour raccourcir la période temporelle avec la durée d'une opération de mesure.
